# EUROPEAN PATENT APPLICATION

(11) **EP 4 818 560 A1**
(43) Date of publication of application: **07.10.2026**
(21) Application number: 24895183.2
(22) Date of filing: 24.10.2024
(51) Int. Cl.: F16K 31/04, F16K 3/12

(54) **ELECTRIC VALVE**

(30) Priority: 29.11.2023 JP 2023201638
(71) Applicant: Fujikoki Corporation, Tokyo 158-0082 (JP)
(72) Inventor: UEHARA Satoshi, Tokyo 158-0082 (JP)
(74) Representative: Ter Meer und Partner mbB
(86) International application number: PCT/JP2024/037843
(87) International publication number: WO 2025/115467

(57) **Abstract**

An electrically operated valve includes a speed reduction mechanism decelerating rotation of an electric motor, and a transmission mechanism converting rotary motion into linear motion to transmit to a valve body. The transmission mechanism has a rotary lifting shaft connecting first and second feed screw mechanisms having opposite thread directions. The first feed screw mechanism transmits rotary motion from the speed reduction mechanism to the second feed screw mechanism via the rotary lifting shaft and converts rotary motion from the speed reduction mechanism into linear motion to transmit to the second feed screw mechanism via the rotary lifting shaft. The second feed screw mechanism converts rotary motion transmitted from the first feed screw mechanism via the rotary lifting shaft into linear motion to transmit to the valve body and transmits linear motion transmitted from the first feed screw mechanism via the rotary lifting shaft to transmit to the valve body.

## Description

### TECHNICAL FIELD

The present invention relates to an electrically operated valve, and more particularly to a valve structure which improves a valve body lift amount of a gear type electrically operated valve.

### BACKGROUND ART

An electrically operated valve controlling an opening degree of a valve with the use of an electric motor such as a stepping motor has been conventionally used in a refrigeration cycle apparatus which is provided with a refrigerant circuit such as an air conditioner, a refrigerating device and a freezing device.

As the electrically operated valve mentioned above, there is a gear type electrically operated valve. The gear type electrically operated valve is generally provided with a valve main body which has a valve chamber in an inner part thereof and includes flow passages (an inflow passage and an outflow passage) allowing a refrigerant to flow into and out of the valve chamber, a valve body which opens and closes the flow passages or regulating an opening degree by performing a lifting motion within the valve chamber, an electric motor which drives the valve body, a speed reduction mechanism which decelerates a rotation of the electric motor, and a transmission mechanism which converts a decelerated rotary motion into a linear motion to transmit to the valve body.

Further, the following patent literature 1 is provided as a literature disclosing the electrically operated valve as mentioned above.

### CITATION LIST

### PATENT LITERATURE

Patent Literature 1: Japanese Unexamined Patent Application Publication No. 2013-130271

### SUMMARY OF INVENTION

In the meantime, in the conventional electrically operated valve, there are some aspects that are difficult to increase a lifting amount of the valve body and make a greater capacity in the valve. In order to make a greater capacity in the electrically operated valve, a structural change and an increase in size tend to be caused in the electric motor driving the valve body and the speed reduction mechanism, thereby causing an increase of a manufacturing cost, and it becomes difficult to meet the demand of downsizing which has been required in recent years for the electrically operated valve.

Further, the problem as mentioned above can not be solved by the invention described in the patent literature 1 mentioned above.

Therefore, an object of the present invention exists in a point of making a greater capacity in an electrically operated valve (increasing a valve body lift amount) without causing a structural change and an increase in size of an electric motor and a speed reduction mechanism.

In order to solve the problem mentioned above and achieve the object mentioned above, an electrically operated valve according to a first invention of the present patent application is provided with a valve main body which has a valve chamber in an inner part thereof, the valve chamber communicating with an inflow passage allowing a fluid to flow thereinto and an outflow passage allowing the fluid to flow out thereof, a valve body which moves forward and backward with respect to a valve seat formed within the valve chamber, an electric motor which drives the valve body, a speed reduction mechanism which decelerates a rotation of the electric motor, and a transmission mechanism which has a first feed screw mechanism and a second feed screw mechanism having opposite thread directions to each other (in other words, one being a forward thread and the other being a reverse thread), and converts a rotary motion decelerated by the speed reduction mechanism into a linear motion to transmit to the valve body. Further, the transmission mechanism has a rotary lifting shaft. The rotary lifting shaft extends in such a manner as to connect the first feed screw mechanism to the second feed screw mechanism, is provided in one end part with a first screw part constructing the first feed screw mechanism, and is provided in the other end part with a second screw part constructing the second feed screw mechanism.

Further, the first feed screw mechanism transmits the rotary motion output from the speed reduction mechanism to the second feed screw mechanism via the rotary lifting shaft, and converts the rotary motion output from the speed reduction mechanism into the linear motion to transmits the linear motion to the second feed screw mechanism via the rotary lifting shaft. Further, the second feed screw mechanism converts the rotary motion transmitted from the first feed screw mechanism via the rotary lifting shaft into the linear motion to transmit to the valve body, and transmits the linear motion transmitted from the first feed screw mechanism via the rotary lifting shaft to the valve body.

In the conventional electrically operated valve, the rotary motion output from the speed reduction mechanism is generally converted into the linear motion by the feed screw mechanism (corresponding to the first feed screw mechanism in the first invention mentioned above) disposed in the output part of the speed reduction mechanism to be transmitted to the valve body.

On the contrary, the electrically operated valve according to the first invention mentioned above (the same operation and effect as those of the first invention can be obtained in a second invention mentioned later and they are accordingly called as "present invention" collectively) is provided with two feed screw mechanisms between the speed reduction mechanism and the valve body, that is, the first screw mechanism which is disposed in a side of the speed reduction mechanism, and the second feed mechanism which is disposed in a side of the valve body. Therefore, according to the electrically operated valve of the present invention, the linear motion generated (converted) by the second feed screw mechanism is applied to the valve body in addition to the linear motion conventionally transmitted to the valve body. As a result, a greater valve body lift amount than the conventional one can be obtained.

Further, in the electrically operated valve according to the present invention, the thread direction of the first feed screw mechanism and the thread direction of the second feed screw mechanism are configured to be opposite to each other in such a manner that two feed screw mechanisms (the first feed screw mechanism and the second feed screw mechanism) can additionally convert the rotary motion into the linear motion in one diction in place of cancelling each other. More specifically, in the first screw part formed in one end part of the rotary lifting shaft and the second screw part formed in the other end part of the rotary lifting shaft, the directions of the screws are opposite to each other (one is the forward thread and the other is the reverse thread). Describing in more particular, the second feed screw mechanism (the second screw part) is a left-hand thread (a reverse thread) in a case where the first feed screw mechanism (the first screw part) is a right-hand thread (a forward thread), and the second feed screw mechanism (the second screw part) is the right-hand thread (the forward thread) in a case where the first feed screw mechanism (the first screw part) is the left-hand thread (the reverse thread).

Therefore, on the assumption that a direction heading for the electric motor (the speed reduction mechanism) from the valve body is "upward", and a direction heading for the valve body from the electric motor (the speed reduction mechanism) is "downward" about an axial direction of the electrically operated valve, for example, when the rotary motion is output from the speed reduction mechanism to the first rotation direction on the basis of the rotation of the rotor of the electric motor, the linear motion is generated in the upward direction by the first feed screw mechanism, and the linear motion is also generated in the upward direction by the second feed screw mechanism, so that these two linear motions in the upward direction are combined, and the greater lift amount can be obtained in comparison with the conventional case (the case where only the first feed screw mechanism is provided).

Further, when the rotary motion is output from the speed reduction mechanism toward the second rotation direction which is a reverse direction to the first rotation direction, on the basis of the reverse rotation to the above of the rotor of the electric motor, the linear motion is generated in the downward direction by the first feed screw mechanism, and the linear motion is also generated in the downward diction by the second feed screw mechanism, so that the valve body moves down at such an amount that these two linear motions in the downward direction are combined (the lift amount when moving up as mentioned above).

Further, in an aspect of the first invention mentioned above, a screw pitch of the second feed screw mechanism is made greater than a screw pitch of the first feed screw mechanism. According to this aspect, the greater linear motion (greater than the linear motion generated by the first feed screw mechanism) can be generated by the second feed screw mechanism, and the valve body lift amount can be made greater.

On the contrary, the first feed screw mechanism may have the same structure as that of the conventional feed screw mechanism, and it is possible to avoid a structural change and an increase in size of the electric motor and the speed reduction mechanism including the first feed screw mechanism. Therefore, according to the present invention, the electrically operated valve having the greater valve body lift amount can be constructed by utilizing the existing (conventional) electric motor and speed reduction mechanism as they are. Further, according to the present invention, as will be exemplified later for an embodiment, it is possible to manufacture a gate valve (a sluice valve) in which a comparatively great valve body lift amount is required, and a flow rate control valve in which a fine lift amount control is required, with the use of common drive parts (electric motor and speed reduction mechanism) by appropriately regulating (setting changing) the screw pitch and the number of threads of the second feed screw mechanism. Therefore, it is possible to reduce a manufacturing cost as a whole in a case where the various kinds of electrically operated valves are manufactured. Further, the operations and effects as mentioned above can be obtained in the same manner by a second invention mentioned next.

An electrically operated valve according to a second invention of the present patent application is provided with a valve main body which has a valve chamber in an inner part thereof, the valve chamber communicating with an inflow passage allowing a fluid to flow thereinto and an outflow passage allowing the fluid to flow out thereof, a valve body which moves forward and backward with respect to a valve seat formed within the valve chamber, an electric motor which drives the valve body, a speed reduction mechanism which decelerates a rotation of the electric motor, and a transmission mechanism which has a first feed screw mechanism and a second feed screw mechanism having opposite thread directions to each other (one being a forward thread and the other being a reverse thread), and converts a rotary motion decelerated by the speed reduction mechanism into a linear motion to transmit to the valve body. Further, the transmission mechanism has a rotary lifting shaft. The rotary lifting shaft extends in such a manner as to connect the first feed screw mechanism to the second feed screw mechanism, is provided in one end part with a first screw part constructing the first feed screw mechanism, and is provided in the other end part with a second screw part constructing the second feed screw mechanism.

Further, the first feed screw mechanism transmits the rotary motion output from the speed reduction mechanism to the second feed screw mechanism via the rotary lifting shaft, and converts the rotary motion output from the speed reduction mechanism into the linear motion to transmits the linear motion to the second feed screw mechanism via the rotary lifting shaft. Further, the second feed screw mechanism converts the rotary motion transmitted from the first feed screw mechanism via the rotary lifting shaft into the linear motion to transmit to the valve body, and transmits the linear motion transmitted from the first feed screw mechanism via the rotary lifting shaft to the valve body.

Further, in an aspect of the second invention, the number of threads of the second feed screw mechanism is made larger than the number of threads of the first feed screw mechanism. More specifically, in the electrically operated valve according to the one aspect of the second invention, the number of threads of the second feed screw mechanism is made larger than the number of threads of the first feed screw mechanism, in place of the configuration "the screw pitch of the second feed screw mechanism is made greater than the screw pitch of the first feed screw mechanism" provided in the one aspect of the first invention. The linear motion generated by the second feed screw mechanism (that is, the lift amount of the valve body) can be increased also by enlarging the number of threads as mentioned above.

Further, it is possible to include both the feature (the feature relating to the screw pitch) according to the one aspect of the first invention, and the feature (the feature relating to the number of threads) according to the one aspect of the second invention (that is, making the screw pitch of the second feed screw mechanism greater than the screw pitch of the first feed screw mechanism in the electrically operated valve according to the one aspect of the second invention). According to the electrically operated valve as mentioned above, it is possible to further enlarge the valve body lift amount.

According to the present invention, it is possible to increase the valve body lift amount and make a greater capacity in the electrically operated valve without causing any structural change and any increase in size of the electric motor and the speed reduction mechanism.

The other objects, features and advantages of the present invention are apparent from the following description of embodiments according to the present invention which is given on the basis of the accompanying drawings. It is apparent for a person skilled in the art that the present invention is not limited to the following embodiments, but can be variously changed within the scope of the invention described in claims. Further, in each of the drawings, same reference numerals denote the same or corresponding portions.

### BRIEF DESCRIPTION OF DRAWINGS

Fig. 1 is a vertical cross sectional view showing a valve closed state of an electrically operated valve according to a first embodiment of the present invention.
Fig. 2 is a vertical cross sectional view showing a valve opened (fully opened) state of the electrically operated valve according to the first embodiment.
Fig. 3 is a perspective view showing a valve body of the electrically operated valve according to the first embodiment.
Fig. 4 is a vertical cross sectional view showing a valve closed state of an electrically operated valve according to a second embodiment of the present invention.
Fig. 5 is a vertical cross sectional view showing a valve opened (fully opened) state of the electrically operated valve according to the second embodiment.
Fig. 6 is a vertical cross sectional view showing a valve closed state of an electrically operated valve according to a third embodiment of the present invention.
Fig. 7 is a vertical cross sectional view showing a valve opened (fully opened) state of the electrically operated valve according to the third embodiment.
Fig. 8 is a vertical cross sectional view showing a valve closed state of an electrically operated valve according to a fourth embodiment of the present invention.
Fig. 9 is a vertical cross sectional view showing a valve opened (fully opened) state of the electrically operated valve according to the fourth embodiment.

### DESCRIPTION OF EMBODIMENTS

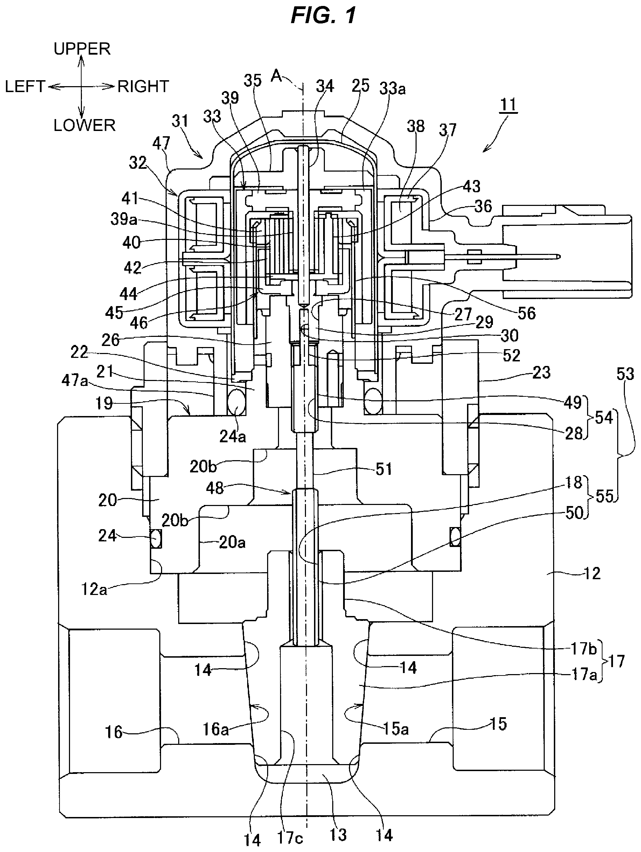

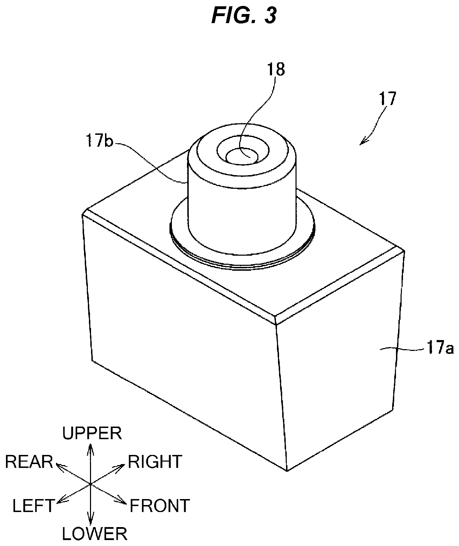

A description will be given of electrically operated valves according to embodiments of the present invention with reference to Figs. 1 to 9. In each of the drawings, there are appropriately displayed two-dimensional coordinates or three-dimensional coordinates which express each of right and left directions and front and rear directions, and the following description is given on the basis of these directions. However, the electrically operated valves according to the present invention and the respective embodiments can be used in various directions, each of the directions is provided for convenience of explanation, and a structure of each of parts of the present invention is not limited by these directions. Further, terms "vertical" and "horizontal" may be used, however, a vertical diction coincides with an up-and-down direction, and a direction orthogonal to the vertical direction is a horizontal direction including a right-left direction and a front-back direction.

### [First Embodiment]

An electrically operated valve 11 according to a first embodiment of the present invention is a sluice valve (a gate valve) which is preferably used for opening and closing a flow passage of a refrigerant in a refrigeration cycle apparatus, for example, an air conditioner.

As shown in Figs. 1 to 3, the sluice valve 11 is provided with a valve main body 12 which has a valve chamber 13 in an inner part, and has an inflow passage 15 allowing the refrigerant to flow into the valve chamber 13 and an outflow passage 16 allowing the refrigerant to flow out of the valve chamber 13, a valve seat 14 which is formed within the valve chamber 13, a valve body 17 which opens and closes a refrigerant flow passage by moving backward and forward (moving up and down) with respect to the valve seat 14, an electric motor 31 which drives the valve body 17, a speed reduction mechanism (a paradox planetary gear speed reduction mechanism) 46 which decelerates the rotation of the electric motor 31, a transmission mechanism 53 which includes a rotary lifting shaft 48 and converts a rotary motion decelerated by the speed reduction mechanism 46 into a linear motion to transmit to the valve body 17, a can (a sealed container) 25 which is covered and not bottomed (is opened in a bottom surface and is closed in a top surface), has a cylindrical shape and forms a sealed space in an upper surface side of the valve main body 12, and a connection member 19 which connects the valve main body 12 and the can 25. As will be mentioned in detail later, the transmission mechanism 53 has two feed screw mechanisms, that is, a first feed screw mechanism 54 which is disposed in the speed reduction mechanism 53 side, and a second feed screw mechanism 55 which is disposed in the valve body 17 side.

The valve chamber 13 is formed in a center part in a lower part of the valve main body 12, and the inflow passage 15 and the outflow passage 16 horizontally extend leftward and rightward with holding the valve chamber 13 therebetween. More specifically, the inflow passage 15 extends horizontally to the valve chamber 13 from a right side surface of the valve main body 12, and opens to a right inner surface of the valve chamber 13 (an opening 15a to the valve chamber 13 in the inflow passage 15 is called as "inflow port").

On the other hand, the outflow passage 16 extends horizontally to the valve chamber 13 from a left side surface of the valve main body 12, and is opened to a left inner surface of the valve chamber 13 (an opening 16a to the valve chamber 13 in the outflow passage 16 is called as "outflow port"). Further, the right inner surface of the valve chamber 13 to which the inflow passage 15 is opened (in particular, a wall surface around the inflow port 15a), and a left inner surface of the valve chamber 13 to which the outflow passage 16 is opened (in particular, a wall surface around the outflow port 16a) form the valve seat 14 which the valve body 17 comes into contact with and separates from. Further, both inner surfaces (a left inner surface and a right inner surface) of the valve chamber 13 is formed into a tapered slope surface in which a distance between them (the left inner surface and the right inner surface) is narrowed downward.

The valve body 17 has a block-shaped valve body main body part 17a which has an approximately rectangular parallelepiped shape, and a cylindrical columnar part 17b which vertically rises upward from an upper surface of the valve body main body part 17a. Both side surfaces (a left side surface and a right side surface) of the valve body main body part 17a are formed into a tapered slope surface in which a distance between them (the left side surface and the right side surface) is narrowed downward in correspondence to both the inner surfaces of the valve chamber 13, and are structured such that the valve body 17 is inserted into the valve chamber 13 like a wedge, so that the left side surface of the valve body main body part 17a comes into close contact with the left inner surface of the valve chamber 13, and the right side surface of the valve body main part 17a comes into close contact with the right inner surface of the valve chamber 13, thereby allowing the inflow port 15a and the outflow port 16a to be closed by the valve body main body part 17a.

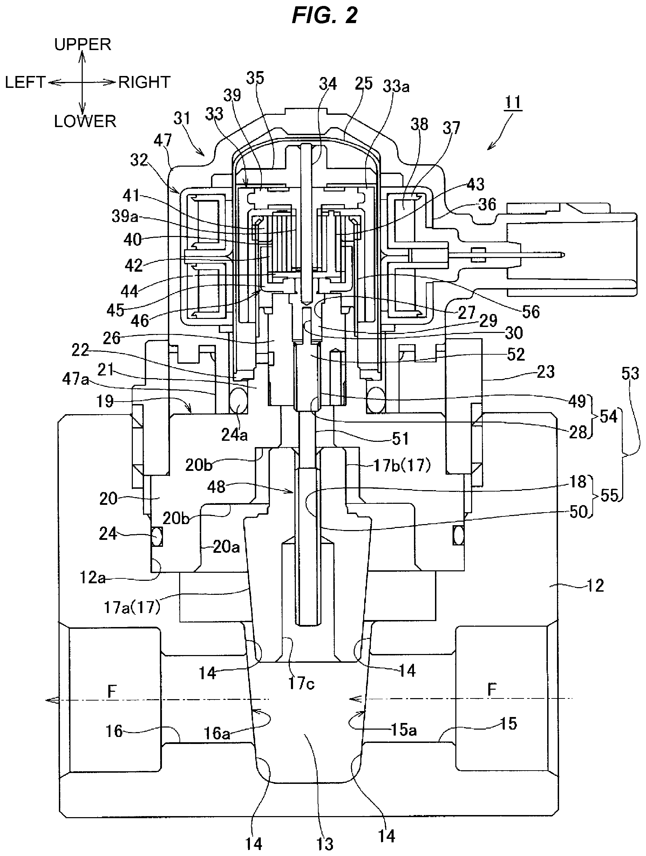

Even in a fully opened state (refer to Fig. 2) in which the valve body 17 rises uppermost, the lower end part of the valve body 17 is arranged between both the inner surfaces of the valve chamber 13 (in other words, the lower end of the valve body 17 is positioned in a lower side than an upper end of both the inner surfaces of the valve chamber 13 in the up-and-down direction). Therefore, the valve body 17 is always regulated by both the inner surfaces of the valve chamber 13 during the lifting motion (may rotate a little together with the rotary lifting shaft 48 when the rotary lifting shaft 48 rotates, however, the rotation is restricted by coming into contact with both the inner surfaces of the valve chamber 13), thereby preventing such a matter that the valve body 17 rotates together with the rotary lifting shaft 48 when opening the valve, and the valve body 17 does not fit between both the inner surfaces of the valve chamber 13 when again performing the valve closing motion, so that the valve closing motion is obstructed, from occurring.

Further, the columnar part 17b constructs the second feed screw mechanism 55 as well as supporting the valve body 17 to the rotary lifting shaft 48, and will be described later together with the transmission mechanism 53. Further, an opening 12a (this opening is called as "connection opening") communicating with the valve chamber 13 is formed in an upper surface of the valve main body 12, and the connection member 19 is fixed to the connection opening 12a in such a manner as to close a top surface (an upper surface) of the valve chamber 13.

The connection member 19 has a cylindrical fitting part 20 which is fitted into the connection opening 12a formed in the upper surface of the valve main body 12, and a cylindrical protruding part 21 which rises upward from an upper surface of the fitting part 20 to extend upward from the upper surface of the valve main body 12 while communicating with the fitting part 20. Fitting of the connection member 19 to the valve main body 12 is performed by fitting and inserting the fitting part 20 into the connection opening 12a, and thereafter screwing a ring-shaped pressing member 23 having on an outer peripheral surface a male screw screwed into a female screw formed on an inner peripheral surface of the connection opening 12a into the connection opening 12a.

The fitting part 20 has a center hole 20a which passes through a center thereof in the up-and-down direction, however, the center hole 20a is provided with two stepped parts 20b in which a diameter of the hole becomes smaller step by step (in two stages) upward like a step shape. Further, in a valve opened (fully opened) state, the upper surface of the columnar part 17b comes into contact with the stepped part 20b in the upper side and the valve body 17 is stopped.

On the contrary, the protruding part 21 has a stage part on an outer peripheral surface thereof, and a lower end part of the can 25 is joined to the stage part via a ring-shaped base member 22, for example, by welding. Thus, there is formed a sealed space including the valve chamber 13, an internal space of the connection member 19 (the fitting part 20 and the protruding part 21), and an internal space of the can 25 which are communicated with each other.

In order to prevent the refrigerant from leaking out of the sealed space toward an external part through the connection opening 12a of the valve main body 12, a seal member (an O-ring) 24 is disposed on an outer peripheral surface of the fitting part 20 in such a manner as to be interposed with respect to an inner peripheral surface of the connection opening 12a. Further, a seal member (an O-ring) 24a is also disposed on an outer peripheral surface of the protruding part 21 in such a manner as to be interposed with respect to an inner peripheral surface of a leg part 47a (mentioned later) of a resin molded cover 47, and the seal member 24a is configured to prevent the moisture from entering the electric motor 31 (the resin molded cover 47) from the external part.

The electric motor 31 is constructed by a stepping motor including a stator 32 which is arranged in an outer side of the can 25, a rotor 33 which is rotatably arranged in an inner side of the can 25, and the resin molded cover 47 which covers the can 25 and the stator 32. The resin molded cover 47 has in a lower end part thereof the cylindrical leg part 47a which surrounds the protruding part 21 of the connection member 19 at a fixed distance.

The stator 32 arranged in the outer side of the can 25 includes a yoke 36, and a coil 38 in which a winding wire is applied to a bobbin 37. On the contrary, the rotor 33 arranged in the inner side of the can 25 is constructed by integrally connecting a cylindrical rotor member 33a which is produced by a magnetic material (a permanent magnet), and a sun gear member 39 which is produced by a resin material.

A rotor support shaft 34 is inserted into a center part of the sun gear member 39, and an upper part of the rotor support shaft 34 is supported by a support member 35 which is arranged in an inner side of a top part of the can 25.

A sun gear 39a of the sun gear member 39 engages with a plurality of planetary gears 40 which are rotatably supported to a shaft 43 disposed in a carrier 44 mounted on a bottom surface of an output gear 45. An upper part of the planetary gear 40 engages with an annular ring gear (an internal tooth fixing gear) 41 which is attached to an upper part of the cylindrical gear case 56 fixed to an upper part of the protruding part 21 of the connection member 19. Further, a lower part of the planetary gear 40 engages with an internal tooth gear 42 of the annular output gear 45. The number of teeth of the ring gear 41 and the number of teeth of the internal tooth gear 42 of the output gear 45 are set to be slightly different number of teeth. As a result, the rotating speed of the sun gear 39a is decelerated with a great reduction ratio to be transmitted to the output gear 45. These gear mechanisms (the sun gear 39a, the planetary gear 40, the ring gear 41 and the output gear 45) construct a speed reduction mechanism (a paradox planetary gear speed reduction mechanism) 46 which decelerates the rotation of the stepping motor 31 mentioned above.

In the present embodiment (same in embodiments mentioned later), there is employed the paradox planetary gear speed reduction mechanism which can obtain the high reduction ratio and is advantageous for downsizing, however, the speed reduction mechanism 46 is not limited to the paradox planetary gear speed reduction mechanism in the present invention, but may be the other planetary gear speed reduction mechanism, and may be the other gear mechanisms than the planetary gear speed reduction mechanism.

A cylindrical screw bearing 26 is press fitted to the protruding part 21 of the connection member 19. The output gear 45 comes into slidable contact with an upper surface of the screw bearing 26. Further, an upper part of a stepped cylindrical output shaft 29 is press fitted to the center of a bottom part of the output gear 45, and a lower part of the output shaft 29 is rotatably inserted into a fitting hole 27 which is formed at the center part of an upper surface of the screw bearing 26. Further, a lower end part of the rotor support shaft 34 is fitted to the upper part of the output shaft 29 in such a manner as to be relatively rotatable.

A female screw part (this is called as "first female screw part") 28 is formed in a lower part at the center of the screw bearing 26, and a male screw part (this is called as "first male screw part", and corresponds to "first screw part" in the present invention) 49 formed in an upper part of the rotary lifting shaft 48 is screwed into the first female screw part 28. The screw bearing 26 (the first female screw part 28) and the rotary lifting shaft 48 (the first male screw part 49) construct the transmission mechanism 53 (the first feed screw mechanism 54) which converts the rotary motion supplied from the electric motor 31 via the speed reduction mechanism 46 into the linear motion toward the up-and-down direction to transmit to the valve body 17.

The rotary lifting shaft 48 is a rod-like member which extends vertically in the up-and-down direction along the center axis line A of the sluice valve 11 from the center part of the screw bearing 27 toward the valve body 17, and has a cylindrical portion (this is called as "first columnar part") which is positioned in an upper part of the rod-like member and has the first male screw part 49 formed on an outer peripheral surface thereof, a cylindrical portion (this is called as "second columnar part") which is positioned in a lower end part of the rod-like member and has a male screw part (this is called as "second male screw part", and corresponds to "second screw part " in the present invention) 50 formed on an outer peripheral surface thereof, a communication part 51 which connects the first columnar part and the second columnar part, and a plate-like part 52 which rises up vertically upward from an upper surface of the first columnar part and has a flat driver shape.

Here, the output gear 45 rotationally moves without moving up and down at a fixed position in the up-and-down direction, and the rotary motion of the output gear 45 is transmitted to the rotary lifting shaft 48 side by inserting the plate-like part 52 which is disposed in an upper end of the rotary lifting shaft 48 and has the flat driver shape into a slit-like fitting groove 30 which is disposed in a lower end part of the output shaft 29 connected to the output gear 45. The rotary lifting shaft 48 receiving the rotary motion rotates together with the output shaft 29, and simultaneously moves linearly in the up-and-down direction by the first feed screw mechanism 54 on the basis of the sliding motion in the up-and-down direction of the plate-like part 52 within the fitting groove 30 of the output shaft 29. More specifically, the rotary lifting shaft 48 linearly moves in the up-and-down direction while rotating when the output gear 45 (the rotor 33) rotates, in spite of the fact that the output gear 45 does not move in the up-and-down direction.

The linear motion of the rotary lifting shaft 48 is transmitted to the valve body 17. The valve body 17 is disposed in a lower end part of the rotary lifting shaft 48. In particular, the columnar part 17b of the valve body 17 has a screw hole which passes through a center thereof in the up-and-down direction. The screw hole is configured to be provided in an inner peripheral surface thereof with a female screw (this is called as "second female screw part) 18 which is screwed into the second male screw part 50 formed in the lower end part of the rotary lifting shaft 48.

Further, in the valve body main body part 17a, there is formed a through hole 17c which passes through the valve body main body part 17a in the up-and-down direction (in such a manner as to communicate) in succession with the screw hole (the second female screw part) 18 and has a greater diameter than the screw hole 18. Therefore, according to the present embodiment, the valve body 17 has a hole which is formed by the screw hole 18 and the through hole 17c communicating with each other and passes through up and down a whole of the valve body. Therefore, according to the valve body structure including the hole mentioned above, it is possible to easily perform a forming process of the screw hole (the second female screw part) 18 when manufacturing, and completely discharge and remove chips generated when threading through the through hole 17c.

In order to install the valve body 17 in the rotary lifting shaft 48, the lower end part of the rotary lifting shaft 48 may be screwed into the columnar part 17b while screwing into the second female screw part 18. Thus, the valve body 17 can be supported to the lower end part of the rotary lifting shaft 48. Therefore, the valve body 17 and the rotary lifting shaft 48 are relatively rotatable.

However, the valve body 17 is always regulated (restricted its motion) by both the inner surfaces of the valve chamber 13 as mentioned above, and the rotation of the valve body 17 is restricted even when the rotary lifting shaft 48 rotates, so that a posture (a position in the rotating direction) thereof is kept. Therefore, when the rotary lifting shaft 48 rotates by the application of the rotation of the output shaft 29, the valve body 17 relatively rotates with respect to the rotary lifting shaft 48, and the valve body 17 can be relatively moved in the up-and-down direction with respect to the rotary lifting shaft 48 on the basis of a feed screw action of the second male screw part 50 of the rotary lifting shaft 48 and the second female screw part 18 of the valve body 17 screwing each other.

The second female screw part 18 of the valve body 17 and the second male screw part 50 in the lower end part of the rotary lifting shaft 48 construct the transmission mechanism 53 (the second feed screw mechanism 55) which converts the rotary motion supplied from the electric motor 31 via the speed reduction mechanism 46 and the rotary lifting shaft 48 into the linear motion in the up-and-down direction to transmit to the valve body 17.

Further, in the present embodiment, the respective center axis lines A of the columnar part 17b of the valve body 17, the rotary lifting shaft 48, the screw bearing 26, the output shaft 29 and the rotor support shaft 34 coincide with an axis of rotation of the rotor 33 and an axis A of the electrically operated valve 11 vertically extending in the up-and-down direction.

Further, the sluice valve 11 according to the present embodiment is provided with the following characteristic features (1) to (3) with regard to the feed screw mechanism (the first feed screw mechanism 54 and the second feed screw mechanism 55), and can accordingly increase a lift amount of the valve body 17 in comparison with the conventional one.
(1) The direction of screw of the second feed screw mechanism 55 (the second male screw part 50 and the second female screw part 18, the same applies hereinafter) is reverse to the direction of screw of the first feed screw mechanism 54 (the first male screw part 49 and the first female screw part 28, the same applies hereinafter). This is for the purpose of allowing two feed screw mechanisms (the first feed screw mechanism 54 and the second feed screw mechanism 55) to additionally convert the rotary motion into the linear motion in one direction in place of cancelling each other. For example, on the assumption that the first feed screw mechanism 54 is formed as a right-hand thread, the second feed screw mechanism 55 is formed as a left-hand thread. Further, on the assumption that the first feed screw mechanism 54 is formed as a left-hand thread, the second feed screw mechanism 55 is formed as a right-hand thread.
(2) The screw pitch of the second feed screw mechanism 55 is larger than the screw pitch of the first feed screw mechanism 54.
(3) The number of threads of the second feed screw mechanism 55 is larger than the number of threads of the first feed screw mechanism 54.

A motion of the sluice valve 11 according to the present embodiment will be described as follows.

When an electric current is supplied to the stator 32 (the coil 38) in such a manner that the rotor 33 rotates in one direction from the valve closed state shown in Fig. 1, the rotation of the rotor 33 is converted into the linear motion by the first feed screw mechanism 54, and the rotary lifting shaft 48 is pulled upward together with the valve body 17. At the same time, the rotation of the rotor 33 is transmitted to the second feed screw mechanism 55 via the rotary lifting shaft 48, and the rotation is converted into the linear motion also in the second feed screw mechanism 55, and the valve body 17 is pulled upward relatively with respect to the rotary lifting shaft 48. In particular, in the second feed screw mechanism 55, the lift amount of the valve body 17 is great based on the characteristic features (2) and (3) relating to the screw pitch and the number of threads, and the upward liner motion generated by the first feed screw mechanism 54 is added, so that the valve body 17 is pulled upward greatly. Thus, the valve body main body part 17a is separated from the valve seat 14, and the refrigerant flowing into from the inflow passage 15 flows out of the outflow passage 16 through the valve chamber 13 (refer to an arrow F in Fig. 2).

On the contrary, when the electric current is supplied to the stator 32 (the coil 38) in such a manner that the rotor 33 rotates in a reverse direction to the one direction mentioned above from the valve opened (fully opened) state, the rotation of the rotor 33 is converted into the linear motion by the first feed screw mechanism 54 and the second feed screw mechanism 55, the rotary lifting shaft 48 moves downward together with the valve body 17, and the valve body 17 moves downward relatively with respect to the rotary lifting shaft 48. Further, when the valve body main body part 17a comes into contact with the valve seat 14, there is formed the valve closed state (refer to Fig. 1) in which the flow passage between the inflow passage 15 and the outflow passage 16 is blocked.

### [Second Embodiment]

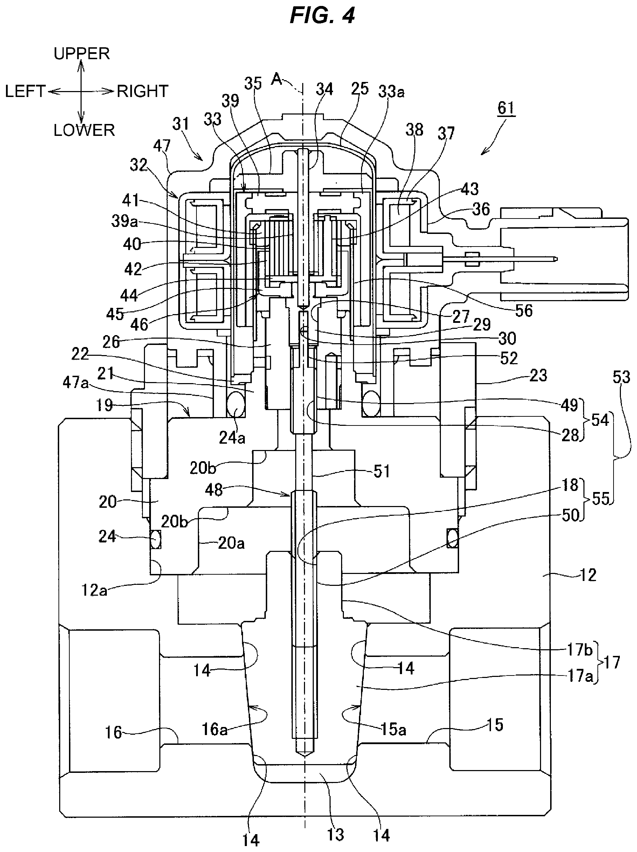

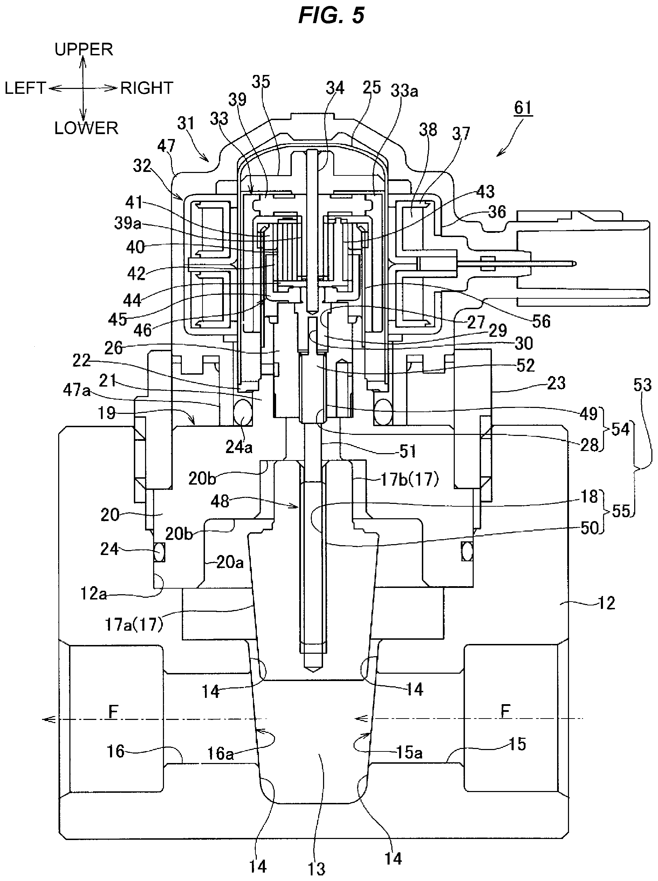

A description will be given of an electrically operated valve 61 according to a second embodiment of the present invention with reference to Figs. 4 and 5. Same reference numerals are attached to the same or corresponding structures as or to those of the electrically operated valve 11 in the first embodiment, an overlapping description will be omitted, and the description is given with a focus on different points (the same applies to a third embodiment and a fourth embodiment mentioned later).

As shown in Figs. 4 and 5, the electrically operated valve 61 according to the second embodiment of the present invention is a sluice valve provided with the valve main body 12 which has the valve chamber 13, the valve seat 14, the inflow passage 15 and the outflow passage 16, the valve body 17 which opens and closes the refrigerant flow passage by moving forward and backward with respect to the valve seat 14, the electric motor 31 which drives the valve body 17, the speed reduction mechanism (the paradox planetary gear speed reduction mechanism) 46 which decelerates the rotation of the electric motor 31, the transmission mechanism 53 (the first feed screw mechanism 54 and the second feed screw mechanism 55) which converts the rotary motion decelerated by the speed reduction mechanism 46 into the linear motion to transmit to the valve body 17, the can (the sealed container) 25 which forms the sealed space in the upper surface of the valve main body 12, and the connection member 19 which connects the valve main body 12 and the can 25, in the same manner as the electrically operated valve 11 according to the first embodiment mentioned above. However, the structure of the valve body 17 is different from the first embodiment.

In particular, the valve body 17 is provided with the block-shaped valve body main body part 17a and the columnar part 17b in the same manner as the first embodiment. In the first embodiment, the holes 18 and 17c passing through the whole of the valve body up and down are formed. However, in the present embodiment, the through hole 17c of the valve body main body part 17a is not provided, and a screw hole 18 forming the second female screw part is formed in such a manner as to extend near the lower surface of the valve body main body part 17a from the upper surface of the columnar part 17b (not to reach the lower surface of the valve body main body part 17a and not to pass through the valve body 17).

Further, the present embodiment is also structured in the same manner as the first embodiment such that the upper surface of the columnar part 17b comes into contact with the stepped part 20b in the upper side of the connection member 19 and the valve body 17 is stopped when the valve is opened (fully opened). On the contrary, in this contact state when the valve is opened, the center hole 20a of the connection member 19 (the fitting part 20) is closed by the columnar part 17b of the valve body 17, and the communication between the valve chamber 13 and the inner part of the can 25 is blocked. The valve body structure as mentioned above of the present embodiment has the following advantage.

The foreign matter such as the garbage and the metal piece may mix into the refrigerant, and the foreign matter may prevent a normal operation of the electric motor 31, the speed reduction mechanism 46 and the transmission mechanism 53 (the first feed screw mechanism 54). On the contrary, according to the present embodiment, the communication between the valve chamber 13 and the inner part of the can 25 can be blocked when the valve is opened. Therefore, it is possible to prevent an operational failure from being generated by the foreign matter in the refrigerant.

A motion of the sluice valve 61 according to the present embodiment is the same as the sluice valve 11 according to the first embodiment.

### [Third Embodiment]

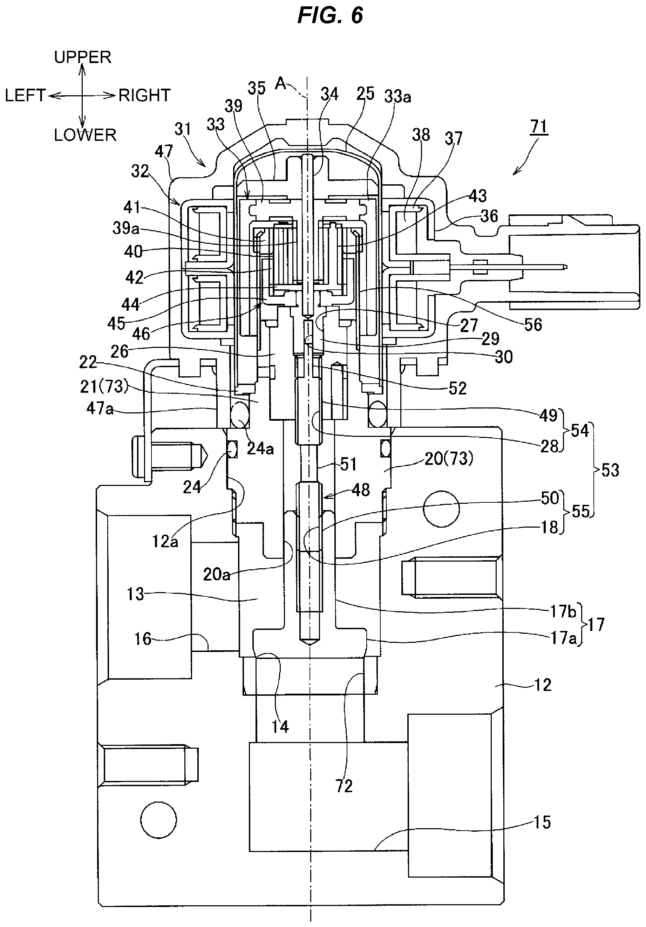

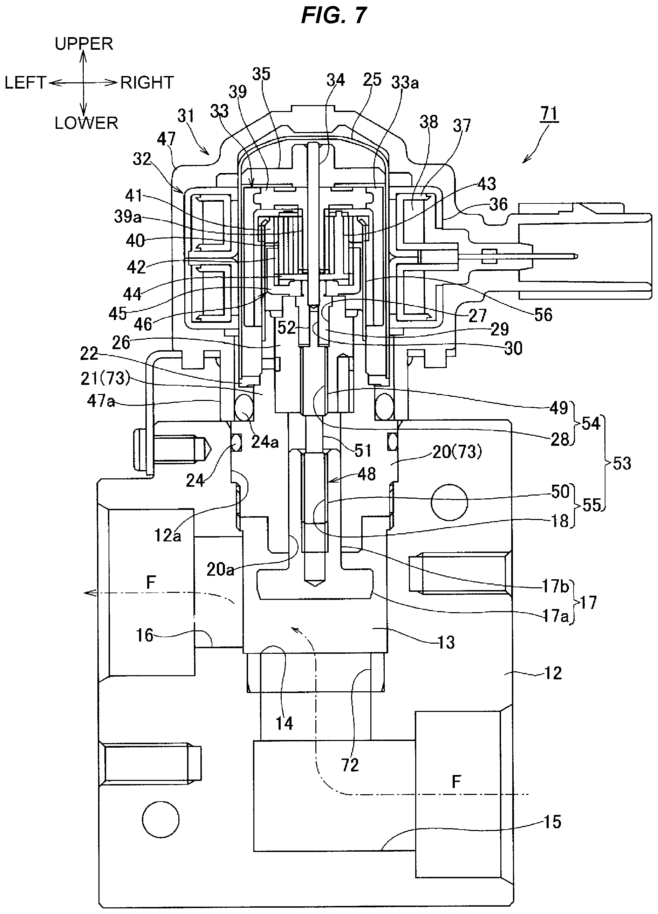

A description will be given of an electrically operated valve according to a third embodiment of the present invention with reference to Figs. 6 and 7.

An electrically operated valve 71 according to the present embodiment is a flow rate control valve which is preferably used for controlling a flow rate of the refrigerant in the refrigeration cycle apparatus such as the air conditioner.

As shown in Figs. 6 and 7, the flow rate control valve 71 is provided with the valve main body 12 which has the valve chamber 13, the inflow passage 15 and the outflow passage 16, a valve port (an orifice) 72 which is formed between the inflow passage 15 and the valve chamber 13, the valve seat 14 which is formed in a valve chamber side end part of the valve port 72, the valve body 17 which controls the refrigerant passing flow rate by moving forward and backward with respect to the valve seat 14, the electric motor 31 which drives the valve body 17, the speed reduction mechanism (the paradox planetary gear speed reduction mechanism) 46 which decelerates the rotation of the electric motor 31, the transmission mechanism 53 which converts the rotary motion decelerated by the speed reduction mechanism 46 into the linear motion to transmit to the valve body, the can (the sealed container) 25 which forms the sealed space on the upper surface of the valve main body 12, and a connection member 73 which connects the valve main body 12 and the can 25.

The transmission mechanism 46 includes the rotary lifting shaft 48 in the same manner as the second embodiment, and is the same as the first and second embodiments in a point of being constructed by the first feed screw mechanism 54 (which is constructed by the first male screw part 49 formed in the upper part of the rotary lifting shaft 48, and the first female screw part 28 formed in the screw bearing 26), and the second feed screw mechanism 55 (which is constructed by the second male screw part 50 formed in the lower end part of the rotary lifting shaft 48, and the second female screw part 18 formed in the valve body 17) which have the opposite screw directions to each other.

The valve body 17 has the valve body main body part 17a which comes into contact with and separates from the valve seat 14, and the cylindrical columnar part 17b which rises upward vertically from the upper surface of the valve body main body part 17a, in the same manner as the second embodiment. However, in the present embodiment, the valve port 72 has a circular horizontal cross sectional shape, and the valve seat 14 has a ring-like (annular) plane shape. Therefore, the valve body main body part 17a has a discoidal shape (circular horizontal cross sectional shape) in correspondence thereto (in such a manner as to seat on the valve seat 14 to close the valve port 72). Further, the screw hole forming the second female screw part 18 is formed in the same manner as the second embodiment in such a manner as to extend near the lower surface of the valve body main body part 17a from the upper surface of the columnar part 17b (in such a manner as not to reach the lower surface of the valve body main body part 17a and not to pass through the valve body 17).

Further, in the present embodiment, the connection member 73 is provided with a function of guiding the valve body 17. In particular, in the present embodiment as is different from each of the embodiments mentioned above, the center hole 20a of the fitting part 20 is formed into a straight (straight with no stepped part 20b) shape, and the columnar part 17b of the valve body 17 is fitted to and inserted into the center hole 20a to be slidable up and down. The valve body 17 moves up and down while being guided by the center hole 20a which the columnar part 17b is fitted to and inserted into.

In the present embodiment, the connection member 73 is provided on an outer peripheral surface with a male screw which is screwed into a female screw formed within the connection opening 12a of the valve main body 12, and is configured to be fixed to the valve main body 12 by being screwed into the connection opening 12a without using the pressing member 23 which is employed in the first and second embodiments (the same applies to a connection member 82 according to a fourth embodiment mentioned later).

Further, an outer periphery of the columnar part 17b of the valve body 17 is formed into a cylindrical shape having a D-shaped form in a horizontal cross section (or quadrangular form), and the center hole 20a of the fitting part 20 is also formed into a D-shaped form in a horizontal cross section (or quadrangular form), thereby preventing the valve body 17 from rotating around the axis A owing to the sliding surface in the flat surface portions. The electrically operated valve 81 according to the fourth embodiment mentioned later is also provided with the same structure of preventing the valve body 17 from rotating around the axis A.

The operation of the flow rate control valve 71 according to the present embodiment will be mentioned as follows.

When an electric current is supplied to the stator 32 (the coil 38) in such a manner that the rotor 33 rotates in one direction from the valve closed state shown in Fig. 6, the rotation of the rotor 33 is converted into the linear motion by the first feed screw mechanism 54, and the rotary lifting shaft 48 is pulled upward together with the valve body 17. At the same time, the rotation of the rotor 33 is transmitted to the second feed screw mechanism 55 via the rotary lifting shaft 48, and the rotation is converted into the linear motion also in the second feed screw mechanism 55, and the valve body 17 is pulled upward relatively with respect to the rotary lifting shaft 48. A lift amount (an upward moving amount) of the valve body 17 is the sum of the lift amount generated by the first feed screw mechanism 54 and the lift amount generated by the second feed screw mechanism 55. Thus, there is formed a valve opened state in which the valve body main body part 17a is separated from the valve seat 14, and the refrigerant flowing into from the inflow passage 15 flows out of the outflow passage 16 through the valve port 72 and the valve chamber 13 (refer to an arrow F in Fig. 7). Further, the refrigerant passing amount (the refrigerant flow rate) in the valve opened state can be regulated by an amount of rotation of the rotor 33.

On the contrary, when the electric current is supplied to the stator 32 (the coil 38) in such a manner that the rotor 33 rotates in a reverse direction to the one direction mentioned above from the valve opened state, the rotation of the rotor 33 is converted into the linear motion by the first feed screw mechanism 54 and the second feed screw mechanism 55, the rotary lifting shaft 48 moves downward together with the valve body 17, and the valve body 17 moves downward relatively with respect to the rotary lifting shaft 48. Further, when the valve body main body part 17a comes into contact with the valve seat 14, there is formed the valve closed state (refer to Fig. 6) in which the flow passage between the inflow passage 15 and the outflow passage 16 is blocked.

### [Fourth Embodiment]

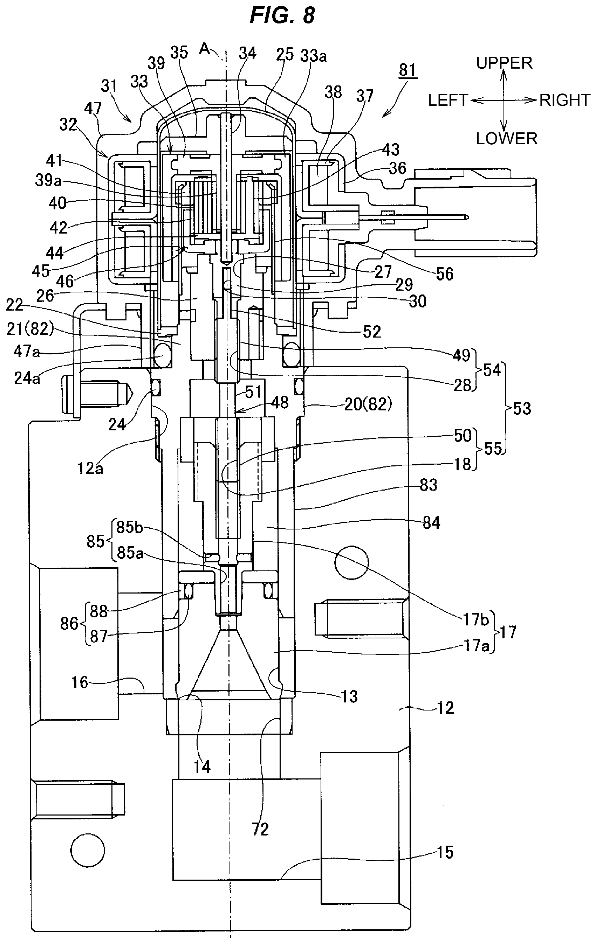

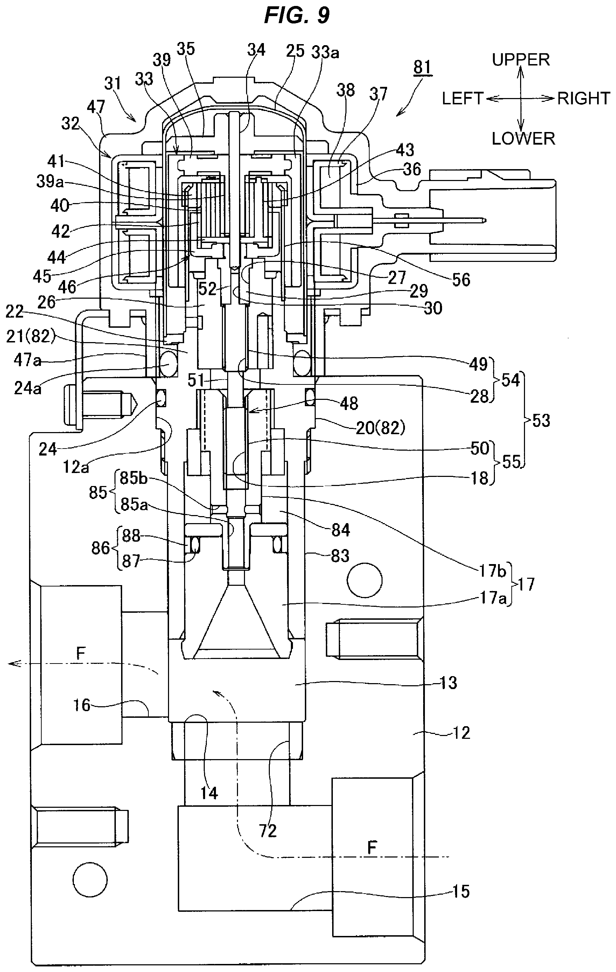

A description will be given of an electrically operated valve according to a fourth embodiment of the present invention with reference to Figs. 8 and 9.

As shown in Figs. 8 and 9, an electrically operated valve 81 according to the present embodiment is a flow rate control valve which controls a refrigerant flow rate by including the electric motor 31, the speed reduction mechanism 46, and the transmission mechanism 53 (the first feed screw mechanism 54 and the second feed screw mechanism 55) in the same manner as the third embodiment, and is configured to improve a valve opening performance by including a structure for cancelling a differential pressure between the upper and lower sides of the valve body.

In particular, in the present embodiment, a cylindrical valve body guide part 83 is formed in the fitting part 20 of the connection member 82, and the valve body 17 is slidably housed in the valve body guide part 83. The valve body 17 has the valve body main body part 17a which comes into contact with and separates from the valve seat 14, and the columnar part 17b which rises upward from the upper surface of the valve body main body part 17a. The valve body main body part 17a is configured to protrude toward the valve seat 14 from an internal space in a lower part of the valve body guide part 83 through an opening in a lower surface of the valve body guide part 83 when moving down, and retract into an inner space in the lower part of the valve body guide part 83 through the lower surface opening when moving up. When a protruding amount of the valve body main body part 17a from the valve body guide part 83 becomes the largest (that is, when the valve is closed), an upper end part of the valve body main body part 17a in which a seal member 86 (mentioned later) is arranged is configured to be arranged within the inner space in the lower part of the valve body guide part 83.

A back pressure chamber 84 is formed in an upper side of the valve body main body part 17a, in more detail, an upper surface side of the valve body main body part 17a within the internal space of the valve body guide part 83 (around a lower part of the columnar part 17b). Further, a pressure equalizing passage 85 is formed in the valve body 17, the pressure equalizing passage 85 communicating a center part in the lower surface of the valve body main body part 17a (a portion facing the valve port 72 when the valve is closed) and the back pressure chamber 84 and introducing the lower pressure in the inflow passage 15 side to the back pressure chamber 84. The pressure equalizing passage 85 is constructed by a vertical passage 85a which extends upward to the lower part of the columnar part 17b from the center part in the lower surface of the valve body main body part 17a in the inner part of the valve body 17, and a horizontal passage 85b which communicates with the vertical passage 85a, extends in a horizontal direction in the lower part of the columnar part 17b and is open to the back pressure chamber 84. The second female screw part 18 is formed in the upper part of the columnar part 17b (an upper position than the horizontal passage 85b).

Further, a seal member 86 is disposed in an outer peripheral surface in the upper part of the valve body main body part 17a in such a manner as to be interposed with respect to an inner peripheral surface of the valve body guide part 83, for the purposes of preventing the outflow passage 16 and the back pressure chamber 84 from communicating when the valve is closed. The seal member 86 is constructed by an O-ring 87, and a lip seal 88 which is arranged in an outer side of the O-ring 87, slidably contacts with the inner peripheral surface of the valve body guide part 83 and has a small sliding resistance.

Further, the present embodiment is set such that a cross sectional area inside the outer periphery of the columnar part 17b and the valve body main body part 17a becomes approximately the same as a cross sectional area of the valve port 72. Therefore, in the valve closed state (Fig. 8), a press-down force (a force in the valve closing direction) and a press-up force (a force in the valve opening direction) applied to the valve body 17 are balanced, so that it is possible to more securely move up the valve body 17 in the valve closed state and perform the valve opening motion.

A motion of the flow rate control valve 81 according to the present embodiment is the same as the flow rate control valve 71 according to the third embodiment. However, the force for pressing down the valve body 17 and the force for pressing up the valve body 17 are balanced as mentioned above on the basis of the function of cancelling the differential pressure (the back pressure chamber 84 and the pressure equalizing passage 85). Therefore, when the valve is opened (Fig. 9) by moving up the valve body 17 from the valve closed state (Fig. 8), it is possible to more securely move up the valve body 17 and perform the valve opening motion in comparison with the flow rate control valve 71 according to the third embodiment. Accordingly, the present embodiment provides a structure which is particularly advantageous when the differential pressure applied to the valve body become larger by making the electrically operated valve a greater capacity.

### REFERENCE SIGNS LIST

A axis line (center axis line)
F flow of refrigerant
11, 61 electrically operated valve (sluice valve)
71, 81 electrically operated valve (flow rate control valve)
12 valve main body
12a connection opening
13 valve chamber
14 valve seat
15 inflow passage
15a inflow port
16 outflow passage
16a outflow port
17 valve body
17a valve body main body part
17b columnar part
17c through hole
18 second female screw part (screw hole)
19, 73, 82 connection member
20 fitting part
20a center hole
20b stepped part
21 protruding part
22 base member
23 pressing member
24, 24a seal member
25 can (sealed container)
26 screw bearing
27 fitting hole
28 first female screw part
29 output shaft
30 fitting groove
31 electric motor (stepping motor)
32 stator
33 rotor
33a rotor member
34 rotor support shaft
35 support member
36 yoke
37 bobbin
38 coil
39 sun gear member
39a sun gear
40 planetary gear
41 ring gear (internal tooth fixing gear)
42 internal tooth gear
43 shaft
44 carrier
45 output gear
46 speed reduction mechanism (paradox planetary gear speed reduction mechanism)
47 resin molded cover
47a leg part of resin molded cover
48 rotary lifting shaft
49 first male screw part
50 second male screw part
51 communication part
52 plate-like part
53 transmission mechanism
54 first feed screw mechanism
55 second feed screw mechanism
56 gear case
72 valve port (orifice)
83 valve body guide part
84 back pressure chamber
85 pressure equalizing passage
85a vertical passage
85b horizontal passage
86 seal member
87 O-ring
88 lip seal

## Claims

1. An electrically operated valve comprising:
a valve main body which has a valve chamber in an inner part thereof, the valve chamber communicating with an inflow passage allowing a fluid to flow thereinto and an outflow passage allowing the fluid to flow out thereof;
a valve body which moves forward and backward with respect to a valve seat formed within the valve chamber;
an electric motor which drives the valve body;
a speed reduction mechanism which decelerates a rotation of the electric motor; and
a transmission mechanism which has a first feed screw mechanism and a second feed screw mechanism having opposite thread directions to each other, and converts a rotary motion decelerated by the speed reduction mechanism into a linear motion to transmit to the valve body,
wherein the transmission mechanism has a rotary lifting shaft which extends in such a manner as to connect the first feed screw mechanism to the second feed screw mechanism, is provided in one end part with a first screw part constructing the first feed screw mechanism, and is provided in the other end part with a second screw part constructing the second feed screw mechanism,
wherein the first feed screw mechanism transmits the rotary motion output from the speed reduction mechanism to the second feed screw mechanism via the rotary lifting shaft, and converts the rotary motion output from the speed reduction mechanism into the linear motion to transmits the linear motion to the second feed screw mechanism via the rotary lifting shaft, and
wherein the second feed screw mechanism converts the rotary motion transmitted from the first feed screw mechanism via the rotary lifting shaft into the linear motion to transmit to the valve body, and transmits the linear motion transmitted from the first feed screw mechanism via the rotary lifting shaft to the valve body.

2. The electrically operated valve according to claim 1, wherein a screw pitch of the second feed screw mechanism is made greater than a screw pitch of the first feed screw mechanism.

3. An electrically operated valve comprising:
a valve main body which has a valve chamber in an inner part thereof, the valve chamber communicating with an inflow passage allowing a fluid to flow thereinto and an outflow passage allowing the fluid to flow out thereof;
a valve body which moves forward and backward with respect to a valve seat formed within the valve chamber;
an electric motor which drives the valve body;
a speed reduction mechanism which decelerates a rotation of the electric motor; and
a transmission mechanism which has a first feed screw mechanism and a second feed screw mechanism having opposite thread directions to each other, and converts a rotary motion decelerated by the speed reduction mechanism into a linear motion to transmit to the valve body,
wherein the transmission mechanism has a rotary lifting shaft which extends in such a manner as to connect the first feed screw mechanism to the second feed screw mechanism, is provided in one end part with a first screw part constructing the first feed screw mechanism, and is provided in the other end part with a second screw part constructing the second feed screw mechanism,
wherein the first feed screw mechanism transmits the rotary motion output from the speed reduction mechanism to the second feed screw mechanism via the rotary lifting shaft, and converts the rotary motion output from the speed reduction mechanism into the linear motion to transmits the linear motion to the second feed screw mechanism via the rotary lifting shaft, and
wherein the second feed screw mechanism converts the rotary motion transmitted from the first feed screw mechanism via the rotary lifting shaft into the linear motion to transmit to the valve body, and transmits the linear motion transmitted from the first feed screw mechanism via the rotary lifting shaft to the valve body.

4. The electrically operated valve according to claim 3, wherein the number of threads of the second feed screw mechanism is made larger than the number of threads of the first feed screw mechanism.

5. The electrically operated valve according to claim 4, wherein a screw pitch of the second feed screw mechanism is made greater than a screw pitch of the first feed screw mechanism.
